# EUROPÄISCHE PATENTSCHRIFT

(11) **EP 4 384 891 B1**
(45) Veröffentlichungstag und Bekanntmachung des Hinweises auf die Patenterteilung: **20.05.2026**
(21) Anmeldenummer: 22765787.1
(22) Anmeldetag: 16.08.2022
(51) Int. Cl.: G06F 3/023, G06F 3/04886

(54) **VERFAHREN UND VORRICHTUNG ZUR EINGABE EINER ZEICHENFOLGE**
METHOD AND DEVICE FOR INPUTTING A CHARACTER STRING
PROCÉDÉ ET DISPOSITIF POUR ENTRER UNE SUITE DE CARACTÈRES

(30) Priorität: 13.08.2021 DE 102021121116
(43) Veröffentlichungstag der Anmeldung: 19.06.2024
(73) Patentinhaber: Brainbox GmbH, 75172 Pforzheim (DE)
(72) Erfinder: KRAUS, Carsten, 75173 Pforzheim (DE)
(74) Vertreter: Meissner Bolte Partnerschaft mbB
(86) Internationale Anmeldenummer: PCT/EP2022/072812
(87) Internationale Veröffentlichungsnummer: WO 2023/017189

(56) Entgegenhaltungen:
- WO-A1-2011/113057

## Beschreibung

Die vorliegende Erfindung betrifft ein Verfahren zur Eingabe einer Zeichenfolge. Bei dem Verfahren werden auf einem Touchscreen eine Vielzahl von auswählbaren Zeichen bei Eingabefeldern angezeigt. Aufeinander folgend werden dann Eingabepositionen auf dem Touchscreen erfasst und in einer Erstzuordnung wird jede Eingabeposition einem angezeigten Zeichen zugeordnet, so dass eine Erstzeichenfolge erfasst wird. Anschließend wird eine Korrekturzeichenfolge ermittelt. Ferner betrifft die Erfindung eine Vorrichtung zur Eingabe einer Zeichenfolge mit einem Touchscreen und einer mit dem Touchscreen gekoppelten Eingabeeinheit. Die Eingabeeinheit ist ausgebildet, auf dem Touchscreen eine Vielzahl von auswählbaren Zeichen bei Eingabefeldern anzuzeigen und aufeinander folgend Eingabepositionen auf dem Touchscreen zu erfassen. Mit der Eingabeeinheit ist eine Erfassungseinheit gekoppelt, die ausgebildet ist, in einer Erstzuordnung jede Eingabeposition einem angezeigten Zeichen zum Erfassen einer Erstzeichenfolge zuzuordnen. Ferner umfasst die Vorrichtung eine Korrektureinheit, die ausgebildet ist, eine Korrekturzeichenfolge zu ermitteln.

Um den Nutzer bei der Eingabe der Zeichenfolge zu unterstützen, ist es bekannt, die erfasste Erstzeichenfolge mit einer Menge zulässiger Zeichenfolgen zu vergleichen. Handelt es sich beispielsweise bei der Zeichenfolge um ein Wort einer bestimmten Sprache, kann die eingegebene Zeichenfolge gemäß der Erstzuordnung mit zulässigen Wörtern dieser Sprache verglichen werden, die in einer Datenbank gespeichert sind. Dieses Verfahren wird insbesondere bei einer Rechtschreibkorrektur eingesetzt, bei der orthographisch falsch geschriebene Wörter durch zulässige, korrekt geschriebene Wörter ersetzt werden. Das orthographisch richtig geschriebene Wort ist dann die zulässige Korrekturzeichenfolge, die dann als Vorschlag ausgegeben wird. Bei einer Auswahl der Korrekturzeichenfolge wird die zunächst erfasste Erstzeichenfolge durch die Korrekturzeichenfolge ersetzt.

Bei derartigen bekannten Verfahren zur Rechtschreibkorrektur ergibt sich das Problem, dass in vielen Fällen Korrekturzeichenfolgen vorgeschlagen werden, die nicht der Eingabeintention des Nutzers entsprechen.

In der Druckschrift WO 2011/113057 A1 wird ein Verfahren zur Eingabe einer Zeichenfolge beschrieben. Dabei wird eine Nutzeroberfläche aufeinanderfolgend angetippt, und es werden die Eingabepositionen erfasst. Aus den erfassten Eingabepositionen wird eine Liste mit Wörtern erzeugt, welche den Eingaben zugeordnet sind. Durch diese Wortliste sollen offensichtliche Fehler bei der Eingabe durch den Nutzer korrigiert werden. Hierfür wird der Eingabesequenz ein Zeichensatz zugeordnet, welcher zu den Buchstaben einer virtuellen Tastatur, einem Satz Annäherungsgewichten und mehreren Merkmalstypen korrespondiert. Die Annäherungsgewichte geben die Wahrscheinlichkeit wieder, dass ein Nutzer einen anderen Tastenanschlag als den erfassten Tastenanschlag durchführen wollte. Diese Wahrscheinlichkeit hängt von der Nähe zwischen den Orten des Eingabemerkmals und dem Ort des Buchstabens auf der virtuellen Tastatur ab.

Der Erfindung liegt daher die Aufgabe zugrunde, ein Verfahren und eine Vorrichtung der eingangs genannten Art anzugeben, welche Korrekturzeichenfolgen ermitteln, welche besser der Eingabeintention eines Nutzers entsprechen, wenn ermittelt wurde, dass die Erstzeichenfolge keine zulässige Zeichenfolge ist.

Erfindungsgemäß wird diese Aufgabe durch ein Verfahren mit den Merkmalen des Anspruchs 1 und eine Vorrichtung mit den Merkmalen des Anspruchs 11 gelöst. Vorteilhafte Ausgestaltungen und Weiterbildungen ergeben sich aus den abhängigen Ansprüchen.

Entsprechend wird bei dem erfindungsgemäßen Verfahren beim Ermitteln der Korrekturzeichenfolge eine Zweitzuordnung durchgeführt, bei der zumindest ein Zeichen der Erstzuordnung durch ein anderes Zeichen gemäß der Zweitzuordnung ersetzt ist, so dass eine Zweitzeichenfolge erzeugt wird. Die Auswahl des anderen Zeichens gemäß der Zweitzuordnung wird dabei in Abhängigkeit von der Anzeigeposition des Eingabefeldes des anderen Zeichens relativ zu der zugehörigen erfassten Eingabeposition durchgeführt. Die Zweitzeichenfolge ist dann die Korrekturzeichenfolge.

Es wurde festgestellt, dass in vielen Fällen nicht eine orthographisch falsche Schreibweise einer Zeichenfolge zu einer unzulässigen Erstzeichenfolge führt, sondern dass der Nutzer nicht dasjenige Eingabefeld für die Erfassung des auszuwählenden Zeichens ausgewählt hat, welches er auswählen wollte.

Bei vielen Geräten, die zur Eingabe von Zeichen einen Touchscreen nutzen, werden die auswählbaren Zeichen innerhalb von Eingabefeldern angezeigt. Der Nutzer kann diese Eingabefelder beispielsweise mit seiner Fingerspitze berühren, um das dem Eingabefeld zugeordnete Zeichen für die einzugebende Zeichenfolge auszuwählen.

Ist die Fläche, auf der die Eingabefelder angezeigt werden, relativ klein, wie zum Beispiel bei einem Smartphone, und sind die Eingabefelder daher auch relativ klein und sehr dicht nebeneinander angeordnet, ergibt sich das Problem, dass der Nutzer möglicherweise die gewünschte Eingabeposition auf dem Touchscreen nicht genau trifft und das Zeichen fehlerhaft ausgewählt wird. Dieses Problem tritt auch auf, wenn das Gerät in einer Umgebung eingesetzt wird, in der Beschleunigungskräfte wirken, wie beispielsweise bei Vibrationen, wie sie bei einem Einsatz in einem Kraftfahrzeug auftreten. Bei solchen fehlerhaften Eingaben kann durch das erfindungsgemäße Verfahren eine Korrekturzeichenfolge ermittelt werden, welche besser der Eingabeintention des Nutzers entspricht.

Bei dem erfindungsgemäßen Verfahren wird die erfasste Eingabeposition in Relation zu den Anzeigepositionen der Eingabefelder gesetzt und daraus ein anderes Zeichen ermittelt, welches ein ursprünglich zugeordnetes Zeichen in der Erstzuordnung ersetzt. Auf diese Weise können Fehleingaben korrigiert werden, welche nicht auf fehlendem Wissen der korrekten Orthographie einer Zeichenfolge beruhen, sondern darauf beruhen, dass der Nutzer zum Beispiel neben das Eingabefeld getippt hat, welches er eigentlich auswählen wollte.

Bei einem Eingabefeld handelt es sich insbesondere um eine Fläche auf dem Touchscreen. Ferner kann es sich bei einem Eingabefeld jedoch auch um einen Punkt auf dem Touchscreen handeln. Ein Eingabefeld zeichnet sich dadurch aus, dass diesem Eingabefeld ein Zeichen zugeordnet ist, welches bei der Eingabe ausgewählt wird. Üblicherweise wird dieses Zeichen in Verbindung mit dem Eingabefeld angezeigt. Beispielsweise kann das Zeichen innerhalb der Fläche des Eingabefeldes auf dem Touchscreen wiedergegeben werden.

Bei der Eingabeposition handelt es sich insbesondere um die Koordinaten der Eingabe auf dem zweidimensionalen Touchscreen. Dabei kann zunächst ein Eingabebereich erfasst werden, welcher beispielsweise von dem Bereich gebildet wird, bei dem der Nutzer zum Beispiel mit seiner Fingerkuppe den Touchscreen berührt. Aus diesem Eingabebereich wird dann eine Eingabeposition bestimmt. Dies kann beispielsweise der geometrische Mittelpunkt bzw. der geometrische Schwerpunkt des erfassten Eingabebereichs sein.

Ferner ist es alternativ möglich, dass der Nutzer mit zum Beispiel seinem Finger den Touchscreen bei der Eingabe gar nicht berührt, sondern eine Wechselwirkung zwischen der Oberfläche des Touchscreens und der Fingerkuppe erfasst wird und einer Eingabeposition zugeordnet wird. Bei dieser Wechselwirkung kann es sich beispielsweise um eine kapazitive Kopplung handeln, die es erlaubt, eine Eingabeposition auch dann zu erfassen, wenn sich der Nutzer mit seiner Fingerkuppe nur dem Touchscreen annähert, diesen jedoch nicht direkt berührt. Auch derartige Wechselwirkungen zum Erfassen einer Eingabeposition sind von einem Touchscreen im Sinne der Erfindung umfasst.

Die Eingabefelder sind bei dem erfindungsgemäßen Verfahren insbesondere so angeordnet, dass sie eine Tastatur bilden, bei der die Eingabefelder sehr nahe nebeneinander angeordnet sind.

Vorteilhafterweise ist es durch das erfindungsgemäße Verfahren möglich, die Eingabeintention eines Nutzers besser zu erfassen, wenn eine unzulässige Zeichenfolge ermittelt worden ist, weil der Nutzer ein falsches Eingabefeld ausgewählt hat, weil beispielsweise sehr kleine Eingabefelder sehr nahe nebeneinander liegen oder weil die Eingabe durch Kräfte gestört wurde, die zu Relativbewegungen des Touchscreens zu dem Betätigungsobjekt für die Eingabe, zum Beispiel zu der Fingerspitze eines Nutzers, geführt haben. Aus der relativen Anordnung der erfassten Eingabeposition zu den Anzeigepositionen der Eingabefelder kann bei dem erfindungsgemäßen Verfahren eine Korrekturzeichenfolge ermittelt werden, welche in diesen Fällen besser zur Eingabeintention des Nutzers passt.

Selbst wenn jedoch die Erstzeichenfolge eine zulässige Zeichenfolge ist, kann es sein, dass diese Erstzeichenfolge sehr unwahrscheinlich ist, so dass auch in diesem Fall bei dem erfindungsgemäßen Verfahren die Korrekturzeichenfolge ermittelt wird. Beispielsweise kann es sich um ein sehr seltenes Wort handeln. Ferner kann es sein, dass dieses Wort im Kontext des Satzes sehr unwahrscheinlich ist. In diesem Fall kann erst nachdem eine oder mehrere Zweitzeichenfolgen für die Korrekturzeichenfolge ermittelt worden sind, festgelegt werden, welche Zeichenfolge der Intention des Nutzers am ehesten entspricht.

Gemäß einer anderen Ausgestaltung des erfindungsgemäßen Verfahrens wird geprüft, ob die Erstzeichenfolge eine zulässige Zeichenfolge ist. Die Korrekturzeichenfolge wird in diesem Fall nur dann ermittelt wird, wenn die Prüfung ergibt, dass die Erstzeichenfolge keine zulässige Zeichenfolge ist. Vorteilhafterweise wird hierdurch das Verfahren beschleunigt und der Rechenaufwand verringert.

Gemäß einer Weiterbildung des erfindungsgemäßen Verfahrens wird bei einem Vergleich der Erstzeichenfolge mit Prüfzeichenfolgen aus einer Menge zulässiger Zeichenfolgen jeweils ein Ähnlichkeitsmaß ermittelt. Ferner wird in diesem Fall bei einem Vergleich der Zweitzeichenfolge mit Prüfzeichenfolgen aus der Menge zulässiger Zeichenfolgen jeweils ein Ähnlichkeitsmaß ermittelt. Eine Auswahl einer der Prüfzeichenfolgen als Korrekturzeichenfolge erfolgt dann in Abhängigkeit vom Ähnlichkeitsmaß, wobei je höher das Ähnlichkeitsmaß der Prüfzeichenfolge ist, desto eher wird diese Prüfzeichenfolge als Korrekturzeichenfolge ausgewählt. Insbesondere wie die Prüfzeichenfolge mit dem höchsten Ähnlichkeitsmaß der Korrekturzeichenfolge ausgewählt. Gegebenenfalls können jedoch noch weitere Parameter bei der Auswahl der Prüfzeichenfolge berücksichtigt werden, wie dies später erläutert wird.

Bei der Menge zulässiger Zeichenfolgen kann es sich beispielsweise um Wörter einer Sprache handeln, die beispielsweise in einem Thesaurus gespeichert sind. Die Prüfzeichenfolgen sind in diesem Fall somit die Wörter einer Sprache. Bevorzugt wird die Erstzeichenfolge mit denselben Prüfzeichenfolgen verglichen, wie die Zweitzeichenfolge.

Beim Ermitteln des Ähnlichkeitsmaßes können an sich bekannte Verfahren zur Rechtschreibkorrektur angewandt werden. Es wird somit eine Rechtschreibkorrektur für die Erstzeichenfolge durchgeführt. Ferner wird eine Rechtschreibkorrektur für die Zweitzeichenfolge durchgeführt, wobei jeweils ein Ähnlichkeitsmaß ermittelt wird. Die Prüfzeichenfolge der Rechtschreibkorrektur mit dem höchsten Ähnlichkeitsmaß wird dann als Korrekturzeichenfolge ausgewählt.

Bei herkömmlichen Rechtschreibkorrekturverfahren ergibt sich das Problem, dass der Position eines Zeichens in der Zeichenfolge ein starkes Gewicht zukommt. Beispielsweise wird dem erfassten Anfangsbuchstaben ein relativ starkes Gewicht gegeben, häufig darf bei dem Korrekturvorschlag der Anfangsbuchstabe nicht geändert sein. Herkömmliche Verfahren zur Rechtschreibkorrektur führen daher zu ungeeigneten Korrekturzeichenfolgen, wenn der Anfangsbuchstabe fehlerhaft erfasst worden ist. Es wird in diesem Fall selten das Wort als Korrektur vorgeschlagen, welches der Nutzer eingeben wollte. Ähnliche Gewichtungen können sich in Abhängigkeit davon ergeben, ob es sich bei dem Buchstaben um einen Vokal oder einen Konsonanten handelt.

Bei der vorstehenden Ausgestaltung des erfindungsgemäßen Verfahrens werden Informationen über die erfassten Koordinaten der Eingabeposition berücksichtigt. In Abhängigkeit von der relativen Anordnung der Eingabeposition zu den Anzeigepositionen der Eingabefelder wird die Zweitzeichenfolge bestimmt. Für diese Zweitzeichenfolge wird dann dasselbe Verfahren zum Beispiel zur Rechtschreibkorrektur angewandt, um ein Ähnlichkeitsmaß zu bestimmen. Wenn bei der Zweitzeichenfolge beispielsweise jedoch der Anfangsbuchstabe verändert wurde, weil beispielsweise die Eingabeposition für die Eingabe des ersten Zeichens am Rand des Eingabefeldes des ersten Zeichens der Erstzeichenfolge relativ nahe bei einem anderen Eingabefeld war, wird das Zeichen dieses anderen Eingabefeldes bei der Zweitzeichenfolge den Anfangsbuchstaben der Erstzeichenfolge ersetzen. Dies kann vorteilhafterweise dazu führen, dass wegen der starken Gewichtung des Anfangsbuchstabens bei dem Korrekturverfahren mit der Zweitzeichenfolge ein hohes Ähnlichkeitsmaß einer Prüfzeichenfolge zugeordnet wird, welche eher der Eingabeintention des Nutzers entspricht.

Bei dieser Ausgestaltung des erfindungsgemäßen Verfahrens wird somit nicht nur ein linguistischer Vergleich von Zeichenfolgen durchgeführt. Es wird vielmehr die Messung der Eingabeposition und die geometrische Anordnung von Eingabefeldern auf dem Touchscreen beim Erzeugen der Korrekturzeichenfolge berücksichtigt. Die Berücksichtigung dieser Messungen führt zu verbesserten Korrekturzeichenfolgen.

Alternativ kann das Ähnlichkeitsmaß auch auf andere Weise bestimmt werden. Beispielsweise kann das in der WO 2007/144199 A1 beschriebene Verfahren zum automatischen Bewerten der Ähnlichkeit von zwei Zeichenketten eingesetzt werden, um das Ähnlichkeitsmaß der Erstzeichenfolge mit jeweils den Prüfzeichenfolgen und der Zweitzeichenfolge jeweils mit den Prüfzeichenfolgen zu ermitteln.

Bei dieser Ausgestaltung des erfindungsgemäßen Verfahrens wird somit ein Zeichen ersetzt und geprüft, ob man zu einer ähnlicheren Prüfzeichenfolge gelangt. Wenn die Zweitzeichenfolge identisch mit einer Prüfzeichenfolge ist, ist in diesem Fall das Ähnlichkeitsmaß maximal, so dass diese Prüfzeichenfolge dann als Korrekturzeichenfolge ausgewählt wird.

Gemäß einer weiteren Ausgestaltung des erfindungsgemäßen Verfahrens wird geprüft, ob die Zweitzeichenfolge eine zulässige Zeichenfolge ist, und das Ähnlichkeitsmaß nur dann ermittelt, wenn die Prüfung ergibt, dass die Zweitzeichenfolge keine zulässige Zeichenfolge ist. Vorteilhafterweise wird hierdurch das Verfahren beschleunigt und der Rechenaufwand verringert.

Gemäß einer weiteren Ausgestaltung des erfindungsgemäßen Verfahrens wird der Erstzeichenfolge ein Konfidenzmaß zugeordnet. Beim Durchführen der Zweitzuordnung der Zweitzeichenfolge wird ein Konfidenzmaß dieser Zweitzuordnung ermittelt. Dabei ist das Konfidenzmaß der Zweitzeichenfolge kleiner als das Konfidenzmaß der Erstzeichenfolge. Ferner wird dabei das Konfidenzmaß der Zweitzeichenfolge in Abhängigkeit von der Eingabeposition, welche bei der Erstzuordnung dem Zeichen zugeordnet ist, welches bei der Zweitzuordnung ersetzt wurde, relativ zu der Position des Eingabefeldes bestimmt, welches dem Zeichen zugeordnet ist, welches bei der Zweitzuordnung eingesetzt wurde.

Das Konfidenzmaß gibt an, wie wahrscheinlich es ist, dass der Nutzer das Zeichen der jeweiligen Zeichenfolge auswählen wollte. Bei der Erstzuordnung wurde davon ausgegangen, dass der Nutzer mit der jeweiligen Eingabeposition das für die Erstzeichenfolge bestimmte Zeichen eingeben wollte. Der Erstzeichenfolge kommt daher ein höheres Konfidenzmaß zu als der Zweitzeichenfolge, da ansonsten die Zweitzeichenfolge die Erstzeichenfolge wäre. Das Konfidenzmaß für die Erstzeichenfolge kann jedoch auch schwanken, je nachdem, wo die Eingabeposition bei dem Eingabefeld angeordnet ist. Wenn die Eingabeposition jeweils immer in der Mitte der Eingabefelder ist, kommt der erfassten Erstzeichenfolge ein hohes Konfidenzmaß zu. Wenn hingegen die Eingabeposition bei zumindest einigen Eingabefeldern am äußeren Rand der Eingabefelder war, führt dies zu einer Verringerung des Konfidenzmaßes für die Erstzeichenfolge.

Entsprechend wird das Konfidenzmaß für die Zweitzeichenfolge bestimmt. Auch in diesem Fall wird berücksichtigt, wie nahe ein Eingabefeld eines Zeichens der Zweitzeichenfolge an der Eingabeposition ist. Je näher das Eingabefeld an dieser Eingabeposition ist, desto höher ist das Konfidenzmaß der entsprechenden Zweitzeichenfolge. Wenn somit die Eingabeposition des für die Erstzeichenfolge ausgewählten Eingabefeldes am Rand dieses Eingabefeldes ist, und zwar benachbart zu einem daneben liegenden anderen Eingabefeld und wird das Zeichen dieses anderen Eingabefeldes als Ersatz bei der Zweitzeichenfolge verwendet, ist das Konfidenzmaß dieser Zweitzeichenfolge zwar geringer als das Konfidenzmaß der Erstzeichenfolge. Die Verringerung des Konfidenzmaßes ist jedoch nicht so groß wie bei dem Ersatz eines Zeichens, welches einem Eingabefeld zugeordnet ist, welches auf der anderen Seite des Randes des Eingabefeldes gemäß Erstzuordnung liegt, oder welches weiter entfernt von diesem Eingabefeld liegt.

Das Konfidenzmaß der Erstzeichenfolge wird somit insbesondere in Abhängigkeit von der Eingabeposition, welche bei der Erstzuordnung dem Zeichen zugeordnet ist, welches bei der Zweitzuordnung ersetzt wurde, relativ zu der Position des Eingabefeldes dieses Zeichens bestimmt.

Vorteilhafterweise kann somit beim Ermitteln der Korrekturzeichenfolge nicht nur ein Ähnlichkeitsmaß zwischen der Erstzeichenfolge bzw. Zweitzeichenfolge zu Prüfzeichenfolgen ermittelt und berücksichtigt werden, sondern es kann auch ein Konfidenzmaß ermittelt und berücksichtigt werden, welches auf der Basis von Messungen von Eingabepositionen und der Bestimmung der relativen Anzeigepositionen von Eingabefeldern ermittelt wird.

Gemäß einer Weiterbildung des erfindungsgemäßen Verfahrens werden mehrere Zweitzuordnungen durchgeführt, so dass mehrere Zweitzeichenfolgen erzeugt werden, und für jede Zweitzeichenfolge wird jeweils ein Konfidenzmaß ermittelt.

Die Auswahl der Prüfzeichenfolge als Korrekturzeichenfolge erfolgt dann insbesondere in Abhängigkeit vom Ähnlichkeitsmaß und vom Konfidenzmaß. Je höher das Ähnlichkeitsmaß der Prüfzeichenfolge ist, desto eher wird diese Prüfzeichenfolge als die Korrekturzeichenfolge ausgewählt. Ferner wird diese Prüfzeichenfolge desto eher als Korrekturzeichenfolge ausgewählt, je höher das Konfidenzmaß der Erst- oder Zweitzeichenfolge ist. Das Konfidenzmaß der Erstzeichenfolge bzw. der Zweitzeichenfolge hat somit einen Einfluss auf die Auswahl der Prüfzeichenfolge. Ein Konfidenzmaß der Zweitzeichenfolge, welches nur geringfügig geringer als das Konfidenzmaß der Erstzeichenfolge ist, kann es somit zu einer Auswahl einer Prüfzeichenfolge als Korrekturzeichenfolge führen, und zwar wenn diese Prüfzeichenfolge ein höheres Ähnlichkeitsmaß als eine andere Prüfzeichenfolge hat, die bei einem Vergleich mit der Erstzeichenfolge das höchste Ähnlichkeitsmaß hat.

Allgemein können für ein Paar aus einer Erst- bzw. Zweitzeichenfolge mit einer Prüfzeichenfolge Ähnlichkeitsmaß und Konfidenzmaß der Erst- bzw. Zweitzeichenfolge die Variablen einer Funktion bilden, deren Funktionswert darüber entscheidet, ob die entsprechende Prüfzeichenfolge dieses Paars als Korrekturzeichenfolge ausgewählt wird.

Gemäß einer Weiterbildung des erfindungsgemäßen Verfahrens wird beim Ermitteln des Konfidenzmaßes die Richtung eines Vektors von dem Mittelpunkt des Eingabefeldes des Zeichens gemäß der Erstzuordnung zu der Eingabeposition mit der Richtung eines zweiten Vektors von dem Mittelpunkt des Eingabefeldes gemäß der Erstzuordnung zu dem Mittelpunkt des Eingabefeldes des Zeichens gemäß der Zweitzuordnung verglichen. Das Konfidenzmaß der Zweitzeichenfolge ist dann umso höher, desto weniger die Richtung des zweiten Vektors von der Richtung des Vektors abweicht.

Alternativ oder zusätzlich kann beim Ermitteln des Konfidenzmaßes ein erster Abstand der Eingabeposition vom Mittelpunkt des Eingabefeldes des Zeichens gemäß der Zweitzuordnung bestimmt werden. Das Konfidenzmaß der Zweitzeichenfolge ist dann umso höher, desto geringer der erste Abstand ist.

Alternativ oder zusätzlich kann beim Ermitteln des Konfidenzmaßes ein zweiter Abstand der Eingabeposition vom nächsten Randpunkt des Eingabefeldes des Zeichens gemäß der Zweitzuordnung bestimmt werden. Das Konfidenzmaß der Zweitzeichenfolge ist dann umso höher, desto geringer der zweite Abstand ist.

Auf diese Weise können die Messwerte der Eingabepositionen in Relation zu der Geometrie der Eingabefelder gesetzt werden, um das Konfidenzmaß zu bestimmen und auf diese Weise zu einer verbesserten Auswahl einer Korrekturzeichenfolge zu kommen.

Die Eingabepositionen der Zeichenfolge werden insbesondere so lange zwischengespeichert, dass sie auch noch nach der Erstzuordnung abrufbar sind. Üblicherweise werden die Informationen über die Eingabeposition verworfen, sobald der Eingabeposition ein Zeichen zugeordnet wurde. In diesem Fall können die Eingabepositionen jedoch nicht mehr berücksichtigt werden, um verbesserte Korrekturzeichenfolgen auszuwählen. Durch die Zwischenspeicherung der Eingabepositionen wird vorteilhaft erreicht, dass die Eingabepositionen auch nach der Erstzuordnung noch abrufbar sind, um auf Basis dieser Eingabepositionen Zweitzeichenfolgen zu ermitteln, aus denen dann eine verbesserte Auswahl einer Korrekturzeichenfolge erzeugt werden kann.

Gemäß einer Weiterbildung des erfindungsgemäßen Verfahrens wird die Korrekturzeichenfolge als annehmbarer Vorschlag ausgegeben. Falls eine Eingabe zur Annahme des Vorschlags erfasst wird, wird die Korrekturzeichenfolge als eingegebene Zeichenfolge ausgewählt.

Die erfindungsgemäße Vorrichtung, wie sie eingangs beschrieben wurde, ist dadurch gekennzeichnet, dass die Korrektureinheit ausgebildet ist, beim Ermitteln der Korrekturzeichenfolge einen Zweitzuordnung durchzuführen, bei der zumindest ein Zeichen der Erstzuordnung durch ein anderes Zeichen gemäß der Zweitzuordnung ersetzt ist, so dass eine Zweitzeichenfolge erzeugt wird. Die Auswahl des anderen Zeichens gemäß der Zweitzuordnung wird dabei in Abhängigkeit von der Anzeigeposition des Eingabefeldes des anderen Zeichens relativ zu der zugehörigen erfassten Eingabeposition durchgeführt. Die Zweitzeichenfolge ist dann die Korrekturzeichenfolge.

Die erfindungsgemäße Vorrichtung ist insbesondere ausgebildet, das vorstehend erläuterte erfindungsgemäße Verfahren auszuführen. Sie weist somit dieselben Vorteile wie das erfindungsgemäße Verfahren auf.

Gemäß einer Weiterbildung der erfindungsgemäßen Vorrichtung weist diese eine mit der Erfassungseinheit gekoppelten Prüfeinheit auf, die ausgebildet ist, zu prüfen, ob die Erstzeichenfolge eine zulässige Zeichenfolge ist. Die Korrektureinheit ist dann mit der Prüfeinheit gekoppelt und ausgebildet, nur dann die Korrekturzeichenfolge zu ermitteln, wenn die Prüfung der Prüfeinheit ergibt, dass die Erstzeichenfolge keine zulässige Zeichenfolge ist.

Die Korrektureinheit der erfindungsgemäßen Vorrichtung ist insbesondere ausgebildet bei einem Vergleich der Erstzeichenfolge mit Prüfzeichenfolgen aus einer Menge zulässiger Zeichenfolgen jeweils ein Ähnlichkeitsmaß zu ermitteln und bei einem Vergleich der Zweitzeichenfolge mit Prüfzeichenfolgen aus der Menge zulässiger Zeichenfolgen jeweils ein Ähnlichkeitsmaß zu ermitteln. Ferner ist die Korrektureinheit insbesondere ausgebildet, eine Auswahl einer der Prüfzeichenfolgen als Korrekturzeichenfolge in Abhängigkeit vom Ähnlichkeitsmaß zu treffen, wobei je höher das Ähnlichkeitsmaß der Prüfzeichenfolge ist, desto eher wird diese Prüfzeichenfolge als die Korrekturzeichenfolge ausgewählt.

Das Ähnlichkeitsmaß kann z. B. nur dann ermittelt werden, wenn die Prüfung ergibt, dass die Zweitzeichenfolge keine zulässige Zeichenfolge ist. Das Ähnlichkeitsmaß kann andererseits jedoch auch dann bestimmt werden, wenn die Prüfung ergibt, dass die Zweitzeichenfolge eine zulässige Zeichenfolge ist.

Des Weiteren kann die Korrektureinheit ausgebildet sein, ein Konfidenzmaß zu bestimmen, wie es vorstehend mit Bezug zu dem erfindungsgemäßen Verfahren erläutert wurde.

Die Erfindung wird nun anhand eines Ausführungsbeispiels mit Bezug zu den Zeichnungen erläutert.
- Figur 1: zeigt schematisch den Aufbau eines Ausführungsbeispiels der erfindungsgemäßen Vorrichtung,
- Figur 2: zeigt das Eingabegerät des Ausführungsbeispiels der erfindungsgemäßen Vorrichtung,
- Figur 3: zeigt den Ablauf eines Ausführungsbeispiels des erfindungsgemäßen Verfahrens und
- Figur 4: veranschaulicht die Zuordnung einer Eingabeposition zu einem Eingabefeld, wie sie bei dem Ausführungsbeispiel des erfindungsgemäßen Verfahrens und der erfindungsgemäßen Vorrichtung vorgenommen wird.

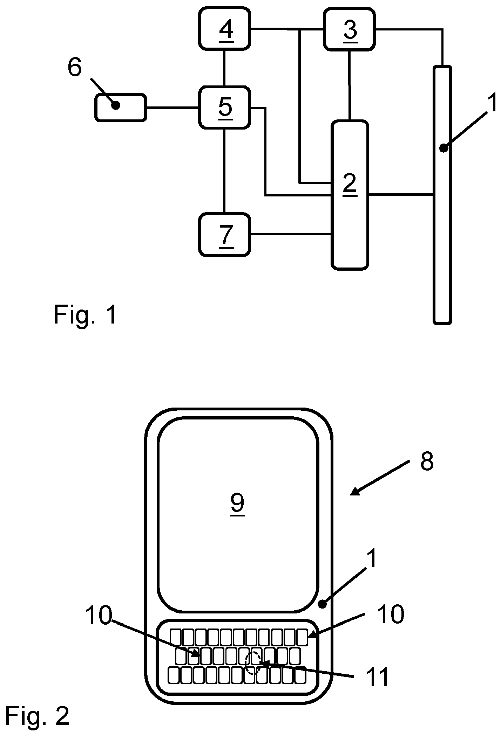

Mit Bezug zu den Figuren 1 und 2 wird zunächst ein Ausführungsbeispiel der erfindungsgemäßen Vorrichtung erläutert:
Wie in Figur 1 gezeigt, umfasst die erfindungsgemäße Vorrichtung einen Touchscreen 1. Der Touchscreen 1 umfasst eine Anzeigefläche sowie eine auf der Anzeigefläche angeordnete berührungsempfindliche Oberfläche.

Der Touchscreen 1 ist mit einer Anzeigesteuerung 2 und einer Eingabeeinheit 3 verbunden. Die Anzeigesteuerung 2 steuert die Anzeige auf der Anzeigefläche des Touchscreens 1. Die Eingabeeinheit 3 ist auch mit der Anzeigesteuerung 2 gekoppelt. Sie kann die Anzeigesteuerung 2 veranlassen, in einem bestimmten Bereich der Anzeigefläche des Touchscreens 1 betätigbare Eingabefelder 10 anzuzeigen, in denen auswählbare Zeichen angezeigt werden. Über diese Eingabefelder 10 kann der Nutzer Eingaben tätigen, d. h. Zeichen auswählen, welche dann mittels der Anzeigesteuerung 2 in einem Anzeigebereich 9 des Touchscreens 1 angezeigt werden, wie es in Figur 2 gezeigt ist.

Mittels des Touchscreens 1 kann einer Eingabe eines Nutzers eine Eingabeposition auf dem Touchscreen zugeordnet werden. Hierfür kann der Nutzer zum Beispiel mit seiner Fingerkuppe die Oberfläche des Touchscreens 1 in einem Berührbereich 11 berühren, wie es in Figur 2 gezeigt ist. Eine Berührung ist jedoch nicht unbedingt erforderlich. Es kann ausreichen, dass der Nutzer seine Fingerkuppe oder ein anderes Betätigungsobjekt in die Nähe des Touchscreens 1 bringt, so dass eine elektromagnetische Kopplung, zum Beispiel eine kapazitive Kopplung, erzeugt wird, durch welche der Position der Fingerkuppe oder des Betätigungsobjekts erfasst werden kann. Derartige Touchscreens 1 sind an sich bekannt

Die Eingabeeinheit 3 ist ausgebildet, den Eingabebereich 11 zu erfassen und einer Eingabeposition zuzuordnen. Dies sind insbesondere die x-y-Koordinaten auf der Oberfläche des Touchscreens 1.

Die Eingabeeinheit 3 ist mit einer Erfassungseinheit 4 gekoppelt. Die Erfassungseinheit 4 ist ausgebildet, in einer Erstzuordnung jede Eingabeposition in Verbindung mit der aktuellen Anzeige auf der Anzeigefläche des Touchscreens 1 ein bestimmtes Eingabefeld 10 zuzuordnen. Einem Eingabefeld 10 ist einem Zeichen zugeordnet, welches beispielsweise innerhalb des Eingabefelds 10 angezeigt wird. Durch das aufeinanderfolgende Erfassen von Zeichen und das Durchführen der Erstzuordnung wird mittels der Erfassungseinheit 4 eine Erstzeichenfolge erfasst.

Die Erfassungseinheit 4 ist mit der Anzeigesteuerung 2 gekoppelt. Die Anzeigesteuerung 2 kann die von der Erfassungseinheit 4 erfassten Zeichen in dem Anzeigebereich 9 des Touchscreens 1 anzeigen.

Die Erfassungseinheit 4 ist außerdem mit einer Prüfeinheit 5 gekoppelt. Die Prüfeinheit 5 ist ausgebildet, zu prüfen, ob die von der Erfassungseinheit 4 übertragene Erstzeichenfolge eine zulässige Zeichenfolge ist. Hierfür ist die Prüfeinheit 5 mit einem Datenspeicher 6 gekoppelt. In dem Datenspeicher 6 ist eine Menge mit zulässigen Zeichenfolgen gespeichert, beispielsweise alle Wörter einer bestimmten Sprache.

Die Prüfeinheit 5 ist mit der Anzeigesteuerung 2 gekoppelt. Wenn die Prüfeinheit 5 ermittelt hat, dass die Erstzeichenfolge eine zulässige Zeichenfolge ist, kann die Prüfeinheit 5 der Anzeigesteuerung 2 ein entsprechendes Signal sowie die Erstzeichenfolge übertragen, so dass mittels der Anzeigesteuerung 2 die Erstzeichenfolge im Anzeigebereich 9 wiedergegeben wird.

Ferner ist die Prüfeinheit 5 mit einer Korrektureinheit 7 gekoppelt. Die Korrektureinheit 7 ist ausgebildet, eine zulässige Korrekturzeichenfolge zu ermitteln, wenn die Prüfung der Prüfeinheit 5 ergibt, dass die Erstzeichenfolge keine zulässige Zeichenfolge ist. Wie es später erläutert wird, erzeugt die Korrektureinheit 7 eine Korrekturzeichenfolge, welche eine zulässige Zeichenfolge ist. Die Korrektureinheit 7 ist auch mit der Anzeigesteuerung 2 gekoppelt, so dass die Korrektureinheit 7 die Korrekturzeichenfolge der Anzeigesteuerung 2 übertragen kann. Mittels der Anzeigesteuerung 2 kann die Korrekturzeichenfolge dann als annehmbarer Vorschlag ausgegeben werden.

Der Touchscreen 1, die Anzeigesteuerung 2, die Eingabeeinheit 3, die Erfassungseinheit 4 sind insbesondere in einem Eingabegerät 8, beispielsweise einem Smartphone, integriert. Des Weiteren können auch die Prüfeinheit 5, der Datenspeicher 6 und die Korrektureinheit 7 in dem Eingabegerät 8 integriert sein. Diese Einheiten können jedoch auch außerhalb des Eingabegeräts 8 angeordnet sein, wobei in diesem Fall eine Datenschnittstelle zwischen dem Eingabegerät 8 und den extern angeordneten Einheiten vorgesehen ist. Alternativ kann auch nur der Datenspeicher 6 außerhalb des Eingabegeräts 8 angeordnet sein.

Wie in Figur 2 gezeigt, erzeugt das Eingabegerät 8 auf der Anzeigefläche des Touchscreens 1 einen Anzeigebereich 9, in dem die erfassten Erstzeichenfolgen angezeigt werden können. Ferner kann in dem Anzeigebereich 9 auch die Korrekturzeichenfolge als Vorschlag für einen Ersatz eine Erstzeichenfolge angezeigt werden. Alternativ können auch mehrere Korrekturzeichenfolgen für eine Erstzeichenfolge in dem Anzeigebereich 9 angezeigt werden.

Ferner wird von der Anzeigefläche des Touchscreens 1 eine Tastatur mit den Eingabefeldern 10 angezeigt. Zur Eingabe eines Zeichens der Eingabefelder 10 kann der Nutzer den Touchscreen im Bereich der Tastatur bei dem Berührbereich 11 berühren. Diesem Berührbereich 11 wird dann ein Eingabefeld 10 und ein dem Eingabefeld 10 zugeordnetes Zeichen zugeordnet, wie es später erläutert wird.

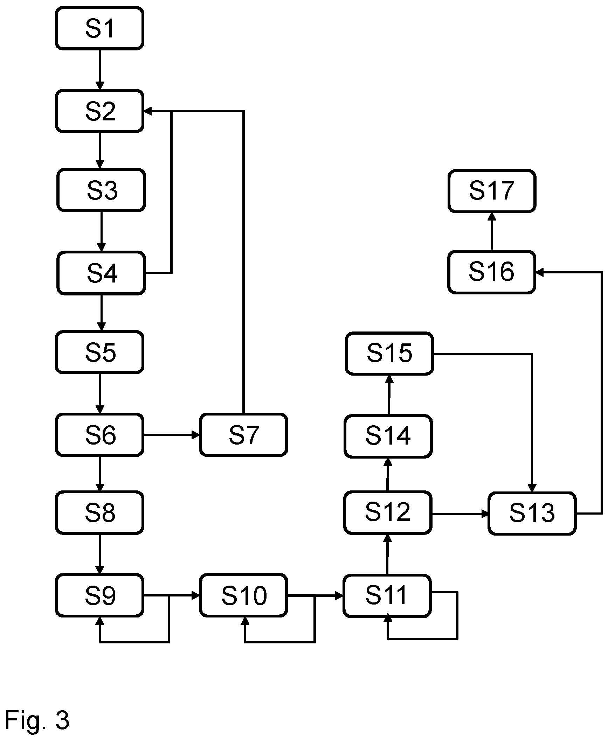

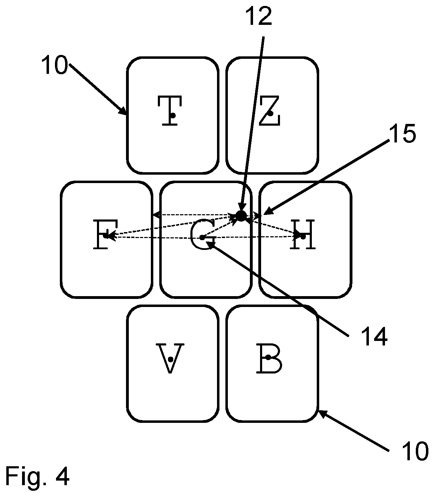

Mit Bezug zu den Figuren 3 und 4 wird nun ein Ausführungsbeispiel des erfindungsgemäßen Verfahrens erläutert, wobei dabei weitere Details der erfindungsgemäßen Vorrichtung erläutert werden. Die erfindungsgemäße Vorrichtung ist insbesondere ausgebildet, das erfindungsgemäße Verfahren auszuführen.

In einem Schritt S1 wird mittels der Eingabeeinheit 3 und Anzeigesteuerung 2 auf dem Touchscreen eine Tastatur mit einer Vielzahl von auswählbaren Zeichen bei Eingabefeldern 10 angezeigt. Das einem Eingabefeld 10 zugeordnete Zeichen wird dabei innerhalb des Eingabefeldes 10 angezeigt, so dass der Nutzer das entsprechende Zeichen durch Berührung des Touchscreens 1 im Bereich des entsprechenden Eingabefeldes 10 auswählen kann. Der Nutzer berührt nun die berührungsempfindliche Oberfläche des Touchscreens 1 in einem Berührbereich 11 beispielsweise mit der Fingerkuppe.

In einem Schritt S2 wird die Fläche dieses Berührbereichs 11 auf der berührungsempfindlichen Oberfläche des Touchscreens 1 mittels der Eingabeeinheit 3 erfasst.

In einem Schritt S3 wird aus diesem flächigen Berührbereich 11 eine Eingabeposition 12 (siehe Figur 4) berechnet. Im vorliegenden Ausführungsbeispiel ist die Eingabeposition 12 der geometrische Mittelpunkt bzw. der geometrische Schwerpunkt der Fläche des Berührbereichs 11. Die Eingabeposition 12 wird zwischengespeichert.

In einem Schritt S4 wird der erfassten Eingabeposition 12 mittels der Erfassungseinheit 4 in einer Erstzuordnung ein Eingabefeld 10 und somit ein angezeigtes Zeichen zugeordnet. Ferner wird nach der Zuordnung eines Zeichens zu einer Eingabeposition 12 dieses Zeichen im Anzeigebereich 9 ausgegeben, so dass der Nutzer jedes eingegebene Zeichen unmittelbar im Anzeigebereich 9 erkennt.

Die Schritte S2 bis S4 werden so oft wiederholt, bis sich aus dem ausgewählten Zeichen ergibt, dass eine Zeichenfolge vollständig eingegeben wurde. Wenn beispielsweise als Zeichen ein Leerzeichen ausgewählt wurde, ergibt sich, dass die zuvor ausgewählten Zeichen ein abgeschlossenes Wort darstellen sollen. In diesem Fall fährt das Verfahren mit dem Schritt S5 fort, in dem aus der Erstzuordnung der erfassten Zeichen eine Erstzeichenfolge erzeugt wird.

Anschließend wird in einem Schritt S6 geprüft, ob die Erstzeichenfolge eine zulässige Zeichenfolge ist. Hierfür wird die Erstzeichenfolge mit Prüfzeichenfolgen verglichen. Die Prüfzeichenfolgen werden aus dem Datenspeicher 6 ausgelesen. Es handelt sich dabei beispielsweise um die zulässigen Wörter einer Sprache. Wenn im Schritt S6 ermittelt worden ist, dass es sich bei der Erstzeichenfolge um eine zulässige Zeichenfolge handelt, wird die Erstzeichenfolge an die Anzeigesteuerung 2 übertragen, welche das Eingabegerät 8 veranlasst, die Erstzeichenfolge als abgeschlossene Zeichenfolge auf dem Touchscreen 1 im Anzeigebereich 9 in einem Schritt S7 auszugeben.

Anschließend fährt das Verfahren mit dem Schritt S2 fort, so dass eine neue Zeichenfolge eingegeben werden kann.

Wenn sich im Schritt S6 ergibt, dass es sich bei der Erstzeichenfolge um keine zulässige Zeichenfolge handelt, fährt das Verfahren mit dem Schritt S8 fort.

Bei einem alternativen Ausführungsbeispiel wird der Schritt S6 ausgelassen und es wird auch dann mit dem Schritt S8 fortgefahren, wenn es sich bei der Erstzeichenfolge um eine zulässige Zeichenfolge handelt. Unabhängig davon, wird der Zeichenfolge jedoch in dem Schritt S7 ausgegeben.

In dem Schritt S8 und den folgenden Schritten wird eine zulässige Korrekturzeichenfolge ermittelt. Dabei wird eine Zweitzuordnung durchgeführt, bei der zumindest ein Zeichen der Erstzuordnung durch ein anderes Zeichen gemäß der Zweitzuordnung ersetzt wird, so dass eine Zweitzeichenfolge erzeugt wird. Zur Erläuterung, wie die Zweitzuordnung durchgeführt wird, wird im Folgenden ergänzend auf die Figur 4 Bezug genommen.

In Figur 4 sind verschiedene Eingabefelder 10 dargestellt, denen jeweils ein auswählbares Zeichen, im gezeigten Ausführungsbeispiel ein Buchstabe, zugeordnet ist. Dieser Buchstabe ist innerhalb des Eingabefeldes 10 angezeigt. Die aus dem Berührbereich 11 ermittelte Berührposition 12 befindet sich bei dem gezeigten Beispiel innerhalb des Bedienfeldes 10 für den Buchstaben G. Bei der Erstzuordnung wird dem Berührbereich 11 entsprechend der Buchstabe G ausgewählt. Wie in Figur 4 gezeigt, befindet sich die Berührposition 12 jedoch nicht in der Mitte des Eingabefeldes 10 für den Buchstaben G, sondern in der Nähe des Randes.

Im Schritt S8 wird daher die Geometrie der Eingabefelder 10, wie sie auf dem Touchscreen 1 angezeigt werden, relativ zu der Berührposition 12 ermittelt. Bei der Zweitzuordnung wird nämlich der Buchstabe G der Erstzuordnung durch ein anderes Zeichen ersetzt, wobei die Auswahl dieses anderen Zeichens gemäß der Zweitzuordnung in Abhängigkeit von der Anzeigeposition des Eingabefeldes 10 des anderen Zeichens relativ zu der zugehörigen erfassten Eingabeposition 12 durchgeführt wird.

Hierfür wird in einem Schritt S9 die Richtung eines ersten Vektors von dem Mittelpunkt 14 des Eingabefeldes 10 des Zeichens G gemäß der Erstzuordnung zu der Eingabeposition 12 mit der Richtung eines zweiten Vektors von dem Mittelpunkt 14 des Eingabefeldes 10 gemäß der Erstzuordnung zu dem Mittelpunkt des Eingabefeldes des Zeichens gemäß Zweitzuordnung verglichen. Aus dem Vergleich der Richtungen dieser beiden Vektoren wird ein Parameter für ein Konfidenzmaß ermittelt. Das Konfidenzmaß gibt dabei an, wie wahrscheinlich es ist, dass der Nutzer das andere Zeichen auswählen wollte.

Bei dem Beispiel gemäß Figur 4 kann somit ein Konfidenzmaß dafür bestimmt werden, dass das andere Zeichen der Buchstabe H oder der Buchstabe F ist. Es ergibt sich, dass die beiden zuvor beschriebenen Vektoren für das Eingabefeld 10 des Buchstabens H eine geringere Richtungsabweichung aufweisen als die entsprechenden Vektoren, welcher zu dem Eingabefeld 10 des Buchstabens F gehören. Vom Mittelpunkt 14 des Eingabefeldes 10 für den Buchstaben G liegt nämlich die Berührposition 12 eher in Richtung des Eingabefeldes 10 für den Buchstaben H als in Richtung des Eingabefeldes 10 für den Buchstaben F. Entsprechend wird dem Buchstaben H als Zeichen, welches gemäß Zweitzuordnung den Buchstaben G der Erstzuordnung ersetzt, ein höheres Konfidenzmaß zugeordnet als dem Buchstaben F. Das Konfidenzmaß der Zweitzeichenfolge ist allgemein umso höher, desto weniger die Richtung des zweiten Vektors von der Richtung des ersten Vektors abweicht.

Als weiterer Parameter beim Ermitteln des Konfidenzmaßes geht ein erster Abstand der Eingabeposition 12 vom Mittelpunkt des Eingabefeldes 10 des Zeichens gemäß der Zweitzuordnung ein. Wie aus Figur 4 ersichtlich, führt auch dieser Parameter zu einem höheren Konfidenzmaß für den Buchstaben H als für den Buchstaben F. Allgemein ist das Konfidenzmaß der Zweitzeichenfolge umso höher, desto geringer der erste Abstand ist.

Als noch weiterer Parameter beim Ermitteln des Konfidenzmaßes geht ein zweiter Abstand der Eingabeposition 12 vom nächsten Randpunkt 15 des Eingabefeldes 10 des Zeichens gemäß der Zweitzuordnung ein. Auch in diesem Fall führt dies zu einem höheren Konfidenzmaß für den Buchstaben H im Vergleich zu dem Konfidenzmaß für den Buchstaben F, da die Eingabeposition 12 näher am nächsten Randpunkt 15 des Eingabefeldes 10 für den Buchstaben H ist als an dem nächsten Randpunkt des Eingabefeldes 10 für den Buchstaben F. Das Konfidenzmaß der Zweitzeichenfolge ist umso höher, desto geringer der zweite Abstand ist.

Auf diese Weise wird im Schritt S9 zu jedem Zeichen in der Umgebung eines Zeichens gemäß der Erstzuordnung ein Konfidenzmaß für die Eingabe dieses Zeichens durchgeführt. Der Schritt S9 wird dann für alle Zeichen die Erstzeichenfolge wiederholt, wobei jeweils für Zeichen von Nachbarfeldern ein Konfidenzmaß ermittelt wird.

Im Anschluss wird im Schritt S10 auch für jedes Zeichen der Erstzuordnung für die Erstzeichenfolge ein Konfidenzmaß bestimmt. Das Konfidenzmaß der Zeichen der Erstzeichenfolge wird in Abhängigkeit von der Eingabeposition 12, welche bei der Erstzuordnung dem Zeichen zugeordnet ist, relativ zu der Position des Eingabefeldes 10 dieses Zeichens bestimmt. Je weiter die Eingabeposition 12 vom Mittelpunkt 14 des Eingabefeldes 10 gemäß der Erstzuordnung entfernt ist, desto geringer ist das Konfidenzmaß dieses Zeichens gemäß der Erstzuordnung. Allerdings ist das Konfidenzmaß des Zeichens gemäß der Erstzuordnung immer höher als das Konfidenzmaß eines anderen Zeichens gemäß der Zweitzuordnung, welches dieses Zeichen in der Zweitzuordnung ersetzt.

In dem Beispiel gemäß Figur 4 ist somit das Konfidenzmaß für das Zeichen G dadurch verringert, dass die Berührposition 12 nicht direkt in der Mitte des Bedienfeldes 10 für das Zeichen G liegt, sondern eher am Rand des Eingabefeldes 10 für den Buchstaben G. Allerdings ist das Konfidenzmaß für das Zeichen H geringer als das Konfidenzmaß für das Zeichen G gemäß Erstzuordnung, da ansonsten das Zeichen H bei der Erstzuordnung ausgewählt worden wäre. Mit Abschluss des Schrittes S10 liegt somit auch das Konfidenzmaß für jedes Zeichen der Erstzeichenfolge vor.

Im Schritt S11 wird nun anhand der ermittelten Konfidenzmaße eine Zweitzuordnung durchgeführt. Dabei wird ein Zeichen der Erstzuordnung durch ein anderes Zeichen ersetzt, und zwar durch das Zeichen, bei dem die Differenz zu dem Konfidenzmaß des Zeichens der Erstzeichenfolge, welches es ersetzten würde, am geringsten ist. Das Konfidenzmaß der Zweitzeichenfolge ergibt sich dann aus den Konfidenzmaßen der jeweiligen Zeichen der Zweitzeichenfolge. Auf entsprechende Weise wird in Schritt S11 eine weitere Zweitzeichenfolge oder mehrere weitere Zweitzeichenfolgen bestimmt, wobei jeder Zweitzeichenfolge ein Konfidenzmaß zugeordnet ist, welches von dem Konfidenzmaß der ausgetauschten Zeichen abhängt.

Im Schritt S12 wird anschließend geprüft, ob die Zweitzeichenfolge oder eine der Zweitzeichenfolgen eine zulässige Zeichenfolge ist. Wenn dies der Fall ist, wird mit Schritt S13 fortgefahren und die zulässige Zweitzeichenfolge ist die Korrekturzeichenfolge. Diese wird der Anzeigesteuerung 2 übertragen, welche sie im Anzeigebereich 9 als annehmbarer Vorschlag für einen Ersatz der Erstzeichenfolge ausgibt.

Wenn die Zweitzeichenfolge oder keine der Zweitzeichenfolgen eine zulässige Zeichenfolge ist, wird mit Schritt S14 fortgefahren.

Bei einem alternativen Ausführungsbeispiel werden die Schritte S12 und S13 ausgelassen und es wird auch dann mit dem Schritt S14 fortgefahren, wenn es sich bei der Zweitzeichenfolge oder eine der Zweitzeichenfolgen um eine zulässige Zeichenfolge handelt.

Im Schritt S14 wird für die Erstzeichenfolge und die Zweitzeichenfolge bzw. die Zweitzeichenfolgen ein Ähnlichkeitsvergleich mit Prüfzeichenfolgen durchgeführt, welche im Datenspeicher 6 als zulässige Zeichenfolgen gespeichert sind. Diese Ähnlichkeitsprüfung kann für alle im Datenspeicher 6 gespeicherten Zeichenfolgen durchgeführt werden oder nur für eine Teilmenge dieser Zeichenfolgen. Für jedes Paar der Erstzeichenfolge mit einer Prüfzeichenfolge wird ein Ähnlichkeitsmaß für diese Prüfzeichenfolge bestimmt. Entsprechend wird für jedes Paar aus einer Zweitzeichenfolge mit einer Prüfzeichenfolge ein Ähnlichkeitsmaß bestimmt. Das Ähnlichkeitsmaß kann auf dieselbe Weise bestimmt werden, wie dies bei einer herkömmlichen Rechtschreibkorrektur durchgeführt wird. Alternativ oder zusätzlich kann das Ähnlichkeitsmaß durch ein Verfahren bestimmt werden, wie es in der WO 2007/144199 A1 beschrieben ist.

In einem Schritt S15 wird dann eine Funktion für jede Prüfzeichenfolge angewandt, welche als Variable das Ähnlichkeitsmaß dieser Prüfzeichenfolge und das Konfidenzmaß der Erst- bzw. Zweitzeichenfolge, mit welcher die entsprechende Prüfzeichenfolge verglichen wurde, eingeht. Desto höher das Ähnlichkeitsmaß und desto höher das entsprechende Konfidenzmaß ist, desto höher ist der Wert dieser Funktion. Die Prüfzeichenfolge mit dem höchsten Funktionswert wird dann im Schritt S15 als Korrekturzeichenfolge ausgewählt.

Das Verfahren fährt dann mit dem Schritt S13 fort, bei welchem die Korrekturzeichenfolge an die Anzeigesteuerung 2 übertragen wird, welche den Touchscreen 1 ansteuert, die Korrekturzeichenfolge im Anzeigebereich 9 als annehmbarer Vorschlag für einen Ersatz der Erstzeichenfolge auszugeben.

Ausgehend vom Schritt S13 fährt das Verfahren mit dem Schritt S16 fort. Im Schritt S16 wird eine etwaige Eingabe zur Annahme des ausgegebenen Vorschlags erfasst. Wenn eine Eingabe zur Annahme des Vorschlags erfasst worden ist, wird im Schritt S17 die Erstzeichenfolge durch die Korrekturzeichenfolge ersetzt und entsprechend im Anzeigebereich 9 angezeigt.

Einem weiteren Ausführungsbeispiel wird die Prüfzeichenfolge allein anhand des Ähnlichkeitsmaßes bestimmt und die das Konfidenzmaß betreffenden Schritte werden nicht durchgeführt. Als Korrekturzeichenfolge wird dann die Prüfzeichenfolge ausgewählt, welche das höchste Ähnlichkeitsmaß hat.

Zur weiteren Erläuterung wird nochmals mit Bezug zu dem in Figur 4 dargestellten Beispiel erläutert, wie die Korrekturzeichenfolge bei dem erfindungsgemäßen Verfahren und der erfindungsgemäßen Vorrichtung ermittelt wird.

Es wird im Folgenden unterstellt, dass der Nutzer als Zielzeichenfolge die folgende Zeichenfolge eingeben wollte:
HALB

Beim ersten Buchstaben H hat der Nutzer jedoch nicht das Eingabefeld 10 für den Buchstaben H berührt, sondern der Berührbereich 11 und damit die Berührposition 12 war, wie in Figur 4 gezeigt, beim Eingabefeld 10 für den Buchstaben G. Es wurde somit folgende Erstzeichenfolge erfasst:
GALB

Das Konfidenzmaß für diese Erstzeichenfolge ist 0,9, da die Eingabeposition 12 nicht in der Mittel des Eingabefeldes 10 für den Buchstaben G ist. Es wird angenommen, dass für die weiteren Buchstaben A L B die Eingabepositionen 12 jeweils in der Mitte der entsprechenden Eingabefelder für diese Buchstaben waren.

Bei dem Verfahren wird nun festgestellt, dass es sich bei der Erstzeichenfolge GALB nicht um eine zulässige Zeichenfolge handelt. Es werden somit verschiedene zwei Zeichenfolgen bestimmt, die jeweiligen Konfidenzmaße werden ermittelt und die Erstzeichenfolge GALB und die ermittelten zwei Zeichenfolgen werden mit mehreren Prüfzeichenfolgen verglichen, welche als zulässige Zeichenfolgen in dem Datenspeicher 6 gespeichert sind.

Aus der folgenden Tabelle ergibt sich das Ähnlichkeitsmaß der Erstzeichenfolge GALB mit verschiedenen Prüfzeichenfolgen:

| Prüfzeichenfolgen | Ähnlichkeitsmaß | |
|---|---|---|
| HALB | 0,6 | (ein Zeichen anders, erstes Zeichen anders) |
| GELB | 0,8 | (ein Zeichen anders) |
| KALB | 0,6 | (ein Zeichen anders, erstes Zeichen anders) |
| LAUB | 0,4 | (zwei Zeichen anders, erstes Zeichen anders) |
| GAST | 0,45 | (zwei Zeichen anders) |

Außerdem werden, wie vorstehend erläutert, mehrere Zweitzeichenfolgen bestimmt. Als erste Zweitzeichenfolge wird folgende Zweitzeichenfolge bestimmt:
HALB

Wie es vorstehend mit Bezug zu Figur 4 erläutert wurde, ist in diesem Fall der Buchstabe G der Erstzeichenfolge durch den Buchstaben H ersetzt worden. Das Konfidenzmaß dieser Zweitzeichenfolge ist 0,8. Es ist geringer als das Konfidenzmaß für die Erstzeichenfolge. Anschließend wird diese Zweitzeichenfolge mit denselben Prüfzeichenfolgen verglichen, wie die Erstzeichenfolge. Für jeweils ein Paar der Zweitzeichenfolgen mit einer Prüfzeichenfolge wird ein Ähnlichkeitsmaß ermittelt. Dies ist in der folgenden Tabelle wiedergegeben:

| Prüfzeichenfolgen | Ähnlichkeitsmaß | |
|---|---|---|
| HALB | 1 | (identisch) |
| GELB | 0,4 | (zwei Zeichen anders, erstes Zeichen anders) |
| KALB | 0,6 | (ein Zeichen anders, erstes Zeichen anders) |
| LAUB | 0,4 | (zwei Zeichen anders, erstes Zeichen anders) |
| GAST | 0,3 | (drei Zeichen anders) |

Für die Prüfzeichenfolge HALB ergibt sich ein Ähnlichkeitsmaß von 1, da diese Prüfzeichenfolge identisch mit der Zweitzeichenfolge ist. Dies würde bei dem erfindungsgemäßen Verfahren bereits dazu führen, dass diese Zweitzeichenfolge als Korrekturzeichenfolge ausgegeben wird.

Selbst wenn jedoch das Ähnlichkeitsmaß nicht wegen der Identität der Zeichenfolge 1 wäre, sondern etwas geringer als dieses maximale Ähnlichkeitsmaß, würde der Wert der oben beschriebenen Funktion für die Prüfzeichenfolge HALB insgesamt höher sein als der Wert der Funktion für die Prüfzeichenfolge GELB, welche das höchste Ähnlichkeitsmaß bei dem Vergleich mit der Erstzeichenfolge hat. Aus diesem Grund wird auch in diesem Fall die Prüfzeichenfolge HALB anstatt der Prüfzeichenfolge GELB als Korrekturvorschlag ausgegeben werden.

Als weitere Zweitzeichenfolge könnte noch, wie in Figur 4 gezeigt, der Buchstabe F den Buchstaben G ersetzen, da er auch neben dem Bedienfeld 10 für den Buchstaben G angeordnet ist. Die Zweitzeichenfolge wäre in diesem Fall die folgende:
FALB

Das Konfidenzmaß für diese Zweitzeichenfolge wäre zum Beispiel 0,6. Sie ist geringer als das Konfidenzmaß für die Zweitzeichenfolge HALB, da sich das Eingabefeld 10 für den Buchstaben F weiter entfernt von der Berührposition 12 befindet als das Eingabefeld 10 für den Buchstaben H.

Auch in diesem Fall wird dann für diese Zweitzeichenfolge das Ähnlichkeitsmaß mit Prüfzeichenfolgen bestimmt. Das Ergebnis ist in folgender Tabelle dargestellt:

| Prüfzeichenfolge n | Ähnlichkeitsmaß | |
|---|---|---|
| HALB | 0,6 | (ein Zeichen anders, erstes Zeichen anders) |
| GELB | 0,4 | (zwei Zeichen anders, erstes Zeichen anders) |
| KALB | 0,6 | (ein Zeichen anders, erstes Zeichen anders) |
| LAUB | 0,4 | (zwei Zeichen anders, erstes Zeichen anders) |

Im Ergebnis wird sich kein höherer Wert für die vorstehend beschriebene Funktion mit den Variablen des Ähnlichkeitsmaßes und des Konfidenzmaßes ergeben, so dass auch bei Berücksichtigung dieser weiteren Zweitzeichenfolge als Korrekturzeichenfolge HALB ausgegeben wird.

### Bezugszeichenliste

- 1: Touchscreen
- 2: Anzeigesteuerung
- 3: Eingabeeinheit
- 4: Erfassungseinheit
- 5: Prüfeinheit
- 6: Datenspeicher
- 7: Korrektureinheit
- 8: Eingabegerät
- 9: Anzeigebereich
- 10: Eingabefelder
- 11: Berührbereich
- 12: Berührposition
- 13: Zentralfläche
- 14: Mittelpunkt eines Eingabefeldes
- 15: Randpunkt eines Eingabefeldes

## Patentansprüche

1. Verfahren zur Eingabe einer Zeichenfolge, bei dem
auf einem Touchscreen (1) eine Vielzahl von auswählbaren Zeichen bei Eingabefeldern (10) angezeigt werden,
aufeinander folgend Eingabepositionen (12) auf dem Touchscreen (1) erfasst werden und in einer Erstzuordnung jede Eingabeposition (12) einem angezeigten Zeichen zugeordnet wird, so dass eine Erstzeichenfolge erfasst wird,
der Erstzeichenfolge ein Konfidenzmaß zugeordnet wird, und
für die Erstzeichenfolge eine Korrekturzeichenfolge ermittelt wird,
wobei beim Ermitteln der Korrekturzeichenfolge eine Zweitzuordnung durchgeführt wird, bei der zumindest ein Zeichen der Erstzuordnung durch ein anderes Zeichen gemäß der Zweitzuordnung ersetzt ist, so dass eine Zweitzeichenfolge erzeugt wird,
wobei die Auswahl des anderen Zeichens gemäß der Zweitzuordnung in Abhängigkeit von der Anzeigeposition des Eingabefeldes (10) des anderen Zeichens relativ zu der zugehörigen erfassten Eingabeposition (12) durchgeführt wird,
wobei beim Durchführen der Zweitzuordnung der Zweitzeichenfolge ein Konfidenzmaß dieser Zweitzuordnung ermittelt wird,
wobei das Konfidenzmaß der Zweitzeichenfolge kleiner als das Konfidenzmaß der Erstzeichenfolge ist und
wobei das Konfidenzmaß der Zweitzeichenfolge in Abhängigkeit von der Eingabeposition (12), welche bei der Erstzuordnung dem Zeichen zugeordnet ist, welches bei der Zweitzuordnung ersetzt wurde, relativ zu der Position des Eingabefeldes bestimmt wird, welches dem Zeichen zugeordnet ist, welches bei der Zweitzuordnung eingesetzt wurde, und
die Zweitzeichenfolge die Korrekturzeichenfolge ist,
**dadurch gekennzeichnet, dass**
beim Ermitteln des Konfidenzmaßes die Richtung eines ersten Vektors von dem Mittelpunkt des Eingabefeldes (14) des Zeichens gemäß der Erstzuordnung zu der Eingabeposition (12) mit der Richtung eines zweiten Vektors von dem Mittelpunkt des Eingabefeldes (14) gemäß der Erstzuordnung zu dem Mittelpunkt des Eingabefeldes (14) des Zeichens gemäß Zweitzuordnung verglichen wird, und das Konfidenzmaß der Zweitzeichenfolge umso höher ist, desto weniger die Richtung des zweiten Vektors von der Richtung des ersten Vektors abweicht, oder
beim Ermitteln des Konfidenzmaßes ein zweiter Abstand der Eingabeposition (12) vom nächsten Randpunkt des Eingabefeldes (15) des Zeichens gemäß der Zweitzuordnung bestimmt wird und das Konfidenzmaß der Zweitzeichenfolge umso höher ist, desto geringer der zweite Abstand ist.

2. Verfahren nach Anspruch 1, wobei geprüft wird, ob die Erstzeichenfolge eine zulässige Zeichenfolge ist, und die Korrekturzeichenfolge nur dann ermittelt wird, wenn die Prüfung ergibt, dass die Erstzeichenfolge keine zulässige Zeichenfolge ist.

3. Verfahren nach Anspruch 2,
wobei bei einem Vergleich der Erstzeichenfolge mit Prüfzeichenfolgen aus einer Menge zulässiger Zeichenfolgen jeweils ein Ähnlichkeitsmaß ermittelt wird und bei einem Vergleich der Zweitzeichenfolge mit Prüfzeichenfolgen aus der Menge zulässiger Zeichenfolgen jeweils ein Ähnlichkeitsmaß ermittelt wird, und
eine Auswahl einer der Prüfzeichenfolgen als Korrekturzeichenfolge in Abhängigkeit vom Ähnlichkeitsmaß erfolgt, wobei je höher das Ähnlichkeitsmaß der Prüfzeichenfolge ist, desto eher wird diese Prüfzeichenfolge als die Korrekturzeichenfolge ausgewählt.

4. Verfahren nach Anspruch 3,
wobei geprüft wird, ob die Zweitzeichenfolge eine zulässige Zeichenfolge ist, und
das Ähnlichkeitsmaß nur dann ermittelt wird, wenn die Prüfung ergibt, dass die Zweitzeichenfolge keine zulässige Zeichenfolge ist.

5. Verfahren nach einem der vorhergehenden Ansprüche, wobei das Konfidenzmaß der Erstzeichenfolge in Abhängigkeit von der Eingabeposition (12), welche bei der Erstzuordnung dem Zeichen zugeordnet ist, welches bei der Zweitzuordnung ersetzt wurde, relativ zu der Position des Eingabefeldes (10) dieses Zeichens bestimmt wird.

6. Verfahren nach einem der vorhergehenden Ansprüche, wobei mehrere Zweitzuordnungen durchgeführt werden, so dass mehrere Zweitzeichenfolgen erzeugt werden, und für jede Zweitzeichenfolge jeweils ein Konfidenzmaß ermittelt wird.

7. Verfahren nach einem der Ansprüche 3 bis 6, wobei die Auswahl der Prüfzeichenfolge als Korrekturzeichenfolge in Abhängigkeit vom Ähnlichkeitsmaß und vom Konfidenzmaß erfolgt, wobei je höher das Ähnlichkeitsmaß der Prüfzeichenfolge ist, desto eher wird diese Prüfzeichenfolge als die Korrekturzeichenfolge ausgewählt und je höher das Konfidenzmaß der Erst- oder Zweitzeichenfolge ist, mit welcher die Prüfzeichenfolge verglichen wurde, desto eher wird diese Prüfzeichenfolge als die Korrekturzeichenfolge ausgewählt.

8. Verfahren nach einem der Ansprüche 1 bis 7,
wobei beim Ermitteln des Konfidenzmaßes ein erster Abstand der Eingabeposition (12) vom Mittelpunkt des Eingabefeldes (10) des Zeichens gemäß der Zweitzuordnung bestimmt wird,
das Konfidenzmaß der Zweitzeichenfolge umso höher ist, desto geringer der erste Abstand ist.

9. Verfahren nach einem der vorhergehenden Ansprüche, wobei die Eingabepositionen (12) der Zeichen der Zeichenfolge so lange zwischengespeichert werden, dass sie auch noch nach der Erstzuordnung abrufbar ist.

10. Verfahren nach einem der vorhergehenden Ansprüche, wobei die Korrekturzeichenfolge als annehmbarer Vorschlag ausgegeben wird und, falls eine Eingabe zur Annahme des Vorschlags erfasst wird, die Korrekturzeichenfolge als eingegebene Zeichenfolge ausgewählt wird.

11. Vorrichtung zur Eingabe einer Zeichenfolge mit:
einem Touchscreen (1),
einer mit dem Touchscreen gekoppelten Eingabeeinheit (3) , die ausgebildet ist auf dem Touchscreen (1) eine Vielzahl von auswählbaren Zeichen bei Eingabefeldern (10) anzuzeigen und aufeinander folgend Eingabepositionen (12) auf dem Touchscreen (1) zu erfassen,
einer mit der Eingabeeinheit (3) gekoppelten Erfassungseinheit (4), die ausgebildet ist, in einer Erstzuordnung jede Eingabeposition (12) einem angezeigten Zeichen zum Erfassen einer Erstzeichenfolge zuzuordnen und
einer Korrektureinheit (7), die ausgebildet ist, eine Korrekturzeichenfolge zu ermitteln,
wobei die Korrektureinheit (7) ausgebildet ist, der Erstzeichenfolge ein Konfidenzmaß zuzuordnen und beim Ermitteln der Korrekturzeichenfolge eine Zweitzuordnung durchzuführen, bei der zumindest ein Zeichen der Erstzuordnung durch ein anderes Zeichen gemäß der Zweitzuordnung ersetzt ist, so dass eine Zweitzeichenfolge erzeugt wird,
wobei die Auswahl des anderen Zeichens gemäß der Zweitzuordnung in Abhängigkeit von der Anzeigeposition des Eingabefeldes (10) des anderen Zeichens relativ zu der zugehörigen erfassten Eingabeposition (12) durchgeführt wird,
wobei beim Durchführen der Zweitzuordnung der Zweitzeichenfolge ein Konfidenzmaß dieser Zweitzuordnung ermittelt wird,
wobei das Konfidenzmaß der Zweitzeichenfolge kleiner als das Konfidenzmaß der Erstzeichenfolge ist und
wobei das Konfidenzmaß der Zweitzeichenfolge in Abhängigkeit von der Eingabeposition (12), welche bei der Erstzuordnung dem Zeichen zugeordnet ist, welches bei der Zweitzuordnung ersetzt wurde, relativ zu der Position des Eingabefeldes bestimmt wird, welches dem Zeichen zugeordnet ist, welches bei der Zweitzuordnung eingesetzt wurde, und
die Zweitzeichenfolge die Korrekturzeichenfolge ist,
**dadurch gekennzeichnet, dass**
beim Ermitteln des Konfidenzmaßes die Richtung eines ersten Vektors von dem Mittelpunkt des Eingabefeldes (14) des Zeichens gemäß der Erstzuordnung zu der Eingabeposition (12) mit der Richtung eines zweiten Vektors von dem Mittelpunkt des Eingabefeldes (14) gemäß der Erstzuordnung zu dem Mittelpunkt des Eingabefeldes (14) des Zeichens gemäß Zweitzuordnung verglichen wird und das Konfidenzmaß der Zweitzeichenfolge umso höher ist, desto weniger die Richtung des zweiten Vektors von der Richtung des ersten Vektors abweicht, oder
beim Ermitteln des Konfidenzmaßes ein zweiter Abstand der Eingabeposition (12) vom nächsten Randpunkt des Eingabefeldes (15) des Zeichens gemäß der Zweitzuordnung bestimmt wird und das Konfidenzmaß der Zweitzeichenfolge umso höher ist, desto geringer der zweite Abstand ist.

12. Vorrichtung nach Anspruch 11,
wobei die Vorrichtung eine mit der Erfassungseinheit (4) gekoppelte Prüfeinheit (5) aufweist, die ausgebildet ist, zu prüfen, ob die Erstzeichenfolge eine zulässige Zeichenfolge ist, und
die Korrektureinheit (7) mit der Prüfeinheit (5) gekoppelt ist und ausgebildet ist, nur dann die Korrekturzeichenfolge zu ermitteln, wenn die Prüfung der Prüfeinheit (5) ergibt, dass die Erstzeichenfolge keine zulässige Zeichenfolge ist.

13. Vorrichtung nach Anspruch 11 oder 12,
wobei die Korrektureinheit (7) ausgebildet ist, bei einem Vergleich der Erstzeichenfolge mit Prüfzeichenfolgen aus einer Menge zulässiger Zeichenfolgen jeweils ein Ähnlichkeitsmaß zu ermitteln und bei einem Vergleich der Zweitzeichenfolge mit Prüfzeichenfolgen aus der Menge zulässiger Zeichenfolgen jeweils ein Ähnlichkeitsmaß zu ermitteln, und
eine Auswahl einer der Prüfzeichenfolgen als Korrekturzeichenfolge in Abhängigkeit vom Ähnlichkeitsmaß zu treffen, wobei je höher das Ähnlichkeitsmaß der Prüfzeichenfolge ist, desto eher wird diese Prüfzeichenfolge als die Korrekturzeichenfolge ausgewählt.

## Claims

1. Method for inputting a character sequence, in which
a plurality of selectable characters are displayed on a touch screen (1) with input fields (10),
input positions (12) are recorded one after other on the touch screen (1) and, in a first allocation, each input position (12) is allocated to a displayed character, such that a first character sequence is recorded,
a confidence measure is allocated to the first sequence, and
for the first character sequence, a correction character sequence is ascertained,
wherein, upon ascertaining the correction character sequence, a second allocation is carried out in which at least one character of the first allocation is replaced by a different character according to the second allocation, such that a second character sequence is generated,
wherein the selection of the other character according to the second allocation is carried out depending on the display position of the input field (10) of the other character relative to the corresponding recorded input position (12),
wherein, when carrying out the second allocation of the second character sequence, a confidence measure of this second allocation is ascertained,
wherein the confidence measure of the second character sequence is smaller than the confidence measure of the first character sequence, and
wherein the confidence measure of the second character sequence is determined depending on the input position (12), which is allocated to the character in the first allocation, which has been replaced in the second allocation, relative to the position of the input field, which is allocated to the character, which has been used in the second allocation, and
the second character sequence is the correction character sequence,
**characterised in that**
when ascertaining the confidence measure, the direction of a first vector from the centre point of the input field (14) of the character is compared according to the first allocation in relation to the input position (12) to the direction of a second vector from the centre point of the input field (14) according to the first allocation in relation to the centre point of the input field (14) of the character according to the second allocation, and the higher the confidence of the measure of the second character sequence, the less the direction of the second vector deviates from the direction of the first vector, or
upon ascertaining the confidence measure, a second distance of the input position (12) from the closest edge point of the input field (15) of the character is determined according to the second allocation, and the higher the confidence measure of the second character sequence, the smaller the second distance.

2. Method according to claim 1,
wherein it is checked whether the first character sequence is a permissible character sequence, and the correction character sequence is only ascertained when the check reveals that the first character sequence is not a permissible character sequence.

3. Method according to claim 2,
wherein, in a comparison of the first character sequence with check character sequences from an amount of permissible character sequences, in each case a similarity measure is ascertained and, in a comparison of the second character sequence with check character sequences from the amount of permissible character sequences, in each case a similarity measure is ascertained, and
a selection of one of the check character sequences as the correction character sequence is carried out depending on the similarity measure, wherein the higher the similarity measure of the check character sequence, the sooner this check character sequence is selected as the correction character sequence.

4. Method according to claim 3,
wherein it is checked whether the second character sequence is a permissible character sequence, and
the similarity measure is only ascertained when the check reveals that the second character sequence is not a permissible character sequence.

5. Method according to one of the preceding claims,
wherein the confidence measure of the first character sequence is determined depending on the input position (12), which has been allocated to the character in the first allocation, said character having been replaced in the second allocation, relative to the position of the input field (10) of this character.

6. Method according to one of the preceding claims,
wherein several second allocations are carried out, such that several second character sequences are generated, and for each second character sequence, a confidence measure is respectively ascertained.

7. Method according to one of claims 3 to 6,
wherein the selection of the check character sequence as the correction character sequence is carried out depending on the similarity measure and on the confidence measure, wherein the higher the similarity measure of the check character sequence, the sooner this check character sequence is selected as the correction character sequence, and the higher the confidence measure of the first or second character sequence, with which the check character sequence has been compared, the sooner this check character sequence is selected as the correction character sequence.

8. Method according to one of claims 1 to 7,
wherein, when ascertaining the confidence measure, a first distance of the input position (12) from the centre point of the input field (10) of the character is determined according to the second allocation,
the confidence measure of the second character sequence is higher the smaller the first distance is.

9. Method according to one of the preceding claims,
wherein the input positions (12) of the character of the character sequence are temporarily stored so that they can still be retrieved even after the first allocation.

10. Method according to one of the preceding claims,
wherein the correction character sequence is issued as a reasonable suggestion and, if an input is recorded to accept the suggestion, the correction character sequence is selected as the input character sequence.

11. Device for inputting a character sequence having:
a touch screen (1),
an input unit (3) coupled to the touch screen, which is formed to display a plurality of selectable characters on the touch screen (1) with input fields (10) and to record input positions (12) on the touch screen (1) one after the other,
a recording unit (4) coupled to the input unit (3), which is formed to allocate each input position (12) to a displayed character in a first allocation for recording a first character sequence, and
a correction unit (7) which is formed to ascertain a correction character sequence,
wherein the correction unit (7) is formed to allocate a confidence measure to the first character sequence and to carry out a second allocation upon ascertaining the correction character sequence, in which at least one character of the first allocation is replaced by a different character according to the second allocation, such that a second character sequence is generated,
wherein the selection of the other character is carried out according to the second allocation depending on the display position of the input field (10) of the other character relative to the corresponding recorded input position (12),
wherein, when carrying out the second allocation of the second character sequence, a confidence measure of this second allocation is ascertained,
wherein the confidence measure of the second character sequence is less than the confidence measure of the first character sequence, and
wherein the confidence measure of the second character sequence is determined depending on the input position (12), which is allocated to the character in the first allocation, which has been replaced in the second allocation, relative to the position of the input field, which is allocated to the character, which has been used in the second allocation, and
the second character sequence is the correct character sequence,
**characterised in that,**
when calculating the confidence measure, the direction of a first vector from the centre point of the input field (14) of the character according to the first allocation to the input position (12) is compared to the direction of a second vector from the centre point of the input field (14) according to the first allocation to the centre point of the input field (14) of the character according to the second allocation, and the higher the confidence measure of the second character sequence, the less the direction of the second vector deviates from the direction of the direction of the first vector, or
when ascertaining the confidence measure, a second distance of the input position (12) from closest edge point of the input field (15) of the character is determined according to the second sequence allocation, and the higher the confidence measure of the second character sequence, the smaller the second distance is.

12. Device according to claim 11,
wherein the device has a check unit (5) coupled to the recording unit (4), which is formed to check whether the first character sequence is a permissible character sequence, and
the correction unit (7) is coupled to the check unit (5) and is formed to only ascertain the correction character sequence when the check of the check unit (5) reveals that the first character sequence is not a permissible character sequence.

13. Device according to claim 11 or 12,
wherein the correction unit (7) is formed to respectively ascertain a similarity measure when comparing the first character sequence to the check character sequence from an amount of permissible character sequences, and to respectively ascertain a similarity measure when comparing the second character sequence to check character sequences from the amount of permissible character sequences, and
to make a selection of one of the check character sequences as the correction character sequence depending on the similarity measure, wherein the higher the similarity measure of the check character sequence, the sooner this check character sequence is selected as the correction character sequence.

## Revendications

1. Procédé de saisie d'une suite de caractères, dans lequel
une pluralité de caractères sélectionnables sont affichés sur un écran tactile (1) dans des champs de saisie (10),
des positions de saisie (12) sont détectées les unes à la suite des autres sur l'écran tactile (1) et chaque position de saisie (12) est associée, lors d'une association initiale, à un caractère affiché, si bien qu'il est détecté une suite de caractères initiale,
une mesure de confiance est associée à la suite de caractères initiale, et
une suite de caractères de correction est déterminée relativement à la suite de caractères initiale ; étant entendu que
lors de la détermination de la suite de caractères de correction, il est réalisé une association secondaire selon laquelle au moins un caractère de l'association initiale est remplacé par un autre caractère conforme à l'association secondaire, si bien qu'il est généré une suite de caractères secondaire,
la sélection dudit autre caractère conforme à l'association secondaire est réalisée en fonction de la position d'affichage du champ de saisie (10) dudit autre caractère par rapport à la position de saisie (12) détectée correspondante,
lors de la réalisation de l'association secondaire de la suite de caractères secondaire, il est déterminé une mesure de confiance de ladite association secondaire,
la mesure de confiance de la suite de caractères secondaire est inférieure à la mesure de confiance de la suite de caractères initiale, et
la mesure de confiance de la suite de caractères secondaire est établie en fonction de la position de saisie (12) qui, lors de l'association initiale, était associée au caractère qui a été remplacé lors de l'association secondaire, par rapport à la position du champ de saisie associée au caractère qui a été utilisé lors de l'association secondaire, et
la suite de caractères secondaire constitue la suite de caractères de correction ;
**caractérisé en ce que**
lors de la détermination de la mesure de confiance, la direction d'un premier vecteur partant du centre du champ de saisie (14) du caractère conforme à l'association initiale et allant vers la position de saisie (12) est comparée avec la direction d'un deuxième vecteur partant du centre du champ de saisie (14) conforme à l'association initiale et allant vers le centre du champ de saisie (14) du caractère conforme à l'association secondaire, et la mesure de confiance de la suite de caractères secondaire est d'autant plus élevée que la direction du deuxième vecteur demeure similaire à la direction du premier vecteur, ou
lors de la détermination de la mesure de confiance, il est établi une deuxième distance de la position de saisie (12) par rapport au point de bord le plus proche du champ de saisie (15) du caractère conforme à l'association secondaire et la mesure de confiance de la suite de caractères secondaire est d'autant plus élevée que la deuxième distance est petite.

2. Procédé selon la revendication 1,
dans lequel il est vérifié si la suite de caractères initiale est une suite de caractères valide, et la suite de caractères de correction n'est déterminée que si la vérification indique que la suite de caractères initiale n'est pas une suite de caractères valide.

3. Procédé selon la revendication 2,
dans lequel, lors d'une comparaison de la suite de caractères initiale avec des suites de caractères de vérification issues d'un ensemble de suites de caractères valides, il est déterminé une mesure de similarité respective, et lors d'une comparaison de la suite de caractères secondaire avec des suites de caractères de vérification issues de l'ensemble de suites de caractères valides, il est déterminé une mesure de similarité respective, et
il est sélectionné l'une des suites de caractères de vérification comme suite de caractères de correction en fonction de la mesure de similarité et, plus la mesure de similarité de la suite de caractères de vérification est élevée, plus cette suite de caractères de vérification est sélectionnable comme suite de caractères de correction.

4. Procédé selon la revendication 3,
dans lequel il est vérifié si la suite de caractères secondaire est une suite de caractères valide, et la mesure de similarité n'est déterminée que si la vérification montre que la suite de caractères secondaire n'est pas une suite de caractères valide.

5. Procédé selon l'une des revendications précédentes,
dans lequel la mesure de confiance de la suite de caractères initiale est établie en fonction de la position de saisie (12) qui, lors de l'association initiale, était associée au caractère qui a été remplacé lors de l'association secondaire, par rapport à la position du champ de saisie (10) de ce caractère.

6. Procédé selon l'une des revendications précédentes,
dans lequel plusieurs associations secondaires sont réalisées pour ainsi générer plusieurs suites de caractères secondaires, et une mesure de confiance est déterminée pour chaque suite de caractères secondaire.

7. Procédé selon l'une quelconque des revendications 3 à 6,
dans lequel la sélection de la suite de caractères de vérification comme suite de caractères de correction est réalisée en fonction de la mesure de similarité et de la mesure de confiance, et, plus la mesure de similarité de la suite de caractères de vérification est élevée, plus cette suite de caractères est sélectionnable comme suite de caractères de correction, et plus la mesure de confiance de la suite de caractères initiale ou de la suite de caractères secondaire avec laquelle la suite de caractères de vérification a été comparée est élevée, plus cette suite de caractères de vérification est sélectionnable comme suite de caractères de correction.

8. Procédé selon l'une des revendications 1 à 7,
dans lequel, lors de la détermination de la mesure de confiance, il est établi une première distance de la position de saisie (12) par rapport au centre du champ de saisie (10) du caractère conforme à l'association secondaire, et
la mesure de confiance de la suite de caractères secondaire est d'autant plus élevée que ladite première distance est petite.

9. Procédé selon l'une des revendications précédentes,
dans lequel les positions de saisie (12) des caractères de la suite de caractères sont stockées temporairement pendant une durée leur permettant d'être encore récupérées après l'association initiale.

10. Procédé selon l'une quelconque des revendications précédentes,
dans lequel la suite de caractères de correction est affichée sous la forme d'une proposition qu'il est possible d'accepter et, si une saisie visant à accepter ladite proposition est détectée, la suite de caractères de correction est sélectionnée comme suite de caractères saisie.

11. Dispositif de saisie d'une suite de caractères comportant :
un écran tactile (1),
une unité de saisie (3) couplée à l'écran tactile et conçue pour afficher une pluralité de caractères sélectionnables sur l'écran tactile (1) dans des champs de saisie (10) et pour détecter les positions de saisie (12) les unes à la suite des autres sur l'écran tactile (1),
une unité de détection (4) couplée à l'unité de saisie (3) et conçue pour associer, lors d'une association initiale, chaque position de saisie (12) à un caractère affiché afin de détecter une suite de caractères initiale, et
une unité de correction (7) conçue pour déterminer une suite de caractères de correction ;
ladite unité de correction (7) étant conçue pour associer une mesure de confiance à la suite de caractères initiale et, lors de la détermination de la suite de caractères de correction, pour réaliser une association secondaire selon laquelle au moins un caractère de l'association initiale est remplacé par un autre caractère conforme à l'association secondaire, si bien qu'il est généré une suite de caractères secondaire ; étant entendu que
la sélection dudit autre caractère conforme à l'association secondaire est réalisée en fonction de la position d'affichage du champ de saisie (10) dudit autre caractère par rapport à la position de saisie (12) détectée correspondante,
lors de la réalisation de l'association secondaire de la suite de caractères secondaire, il est déterminé une mesure de confiance de cette association secondaire,
la mesure de confiance de la suite de caractères secondaire est inférieure à la mesure de confiance de la suite de caractères initiale, et
la mesure de confiance de la suite de caractères secondaire est établie en fonction de la position de saisie (12) qui, lors de l'association initiale, était associée au caractère qui a été remplacé lors de l'association secondaire, par rapport à la position du champ de saisie associée au caractère qui a été utilisé lors de l'association secondaire, et
la suite de caractères secondaire constitue la suite de caractères de correction ;
**caractérisé en ce que**
lors de la détermination de la mesure de confiance, la direction d'un premier vecteur partant du centre du champ de saisie (14) du caractère conforme à l'association initiale et allant vers la position de saisie (12) est comparée avec la direction d'un deuxième vecteur partant du centre du champ de saisie (14) conforme à l'association initiale et allant vers le centre du champ de saisie (14) du caractère conforme à l'association secondaire, et la mesure de confiance de la suite de caractères secondaire est d'autant plus élevée que la direction du deuxième vecteur demeure similaire à la direction du premier vecteur, ou
lors de la détermination de la mesure de confiance, il est établi une deuxième distance de la position de saisie (12) par rapport au point de bord le plus proche du champ de saisie (15) du caractère conforme à l'association secondaire et la mesure de confiance de la suite de caractères secondaire est d'autant plus élevée que la deuxième distance est petite.

12. Dispositif selon la revendication 11,
ledit dispositif présentant une unité de vérification (5) qui est couplée à l'unité de détection (4) et qui est conçue pour vérifier si la suite de caractères initiale est une suite de caractères valide, et
l'unité de correction (7) étant couplée à l'unité de vérification (5) et étant conçue pour déterminer la suite de caractères de correction uniquement si la vérification effectuée par l'unité de vérification (5) indique que la suite de caractères initiale n'est pas une suite de caractères valide.

13. Dispositif selon la revendication 11 ou 12,
dans lequel l'unité de correction (7) est conçue, lors d'une comparaison de la suite de caractères initiale avec des suites de caractères de vérification issues d'un ensemble de suites de caractères valides, pour déterminer une mesure de similarité respective, et, lors d'une comparaison de la suite de caractères secondaire avec des suites de caractères de vérification issues de l'ensemble des suites de caractères valides, pour déterminer une mesure de similarité respective, et
pour sélectionner l'une des suites de caractères de vérification comme suite de caractères de correction en fonction de la mesure de similarité, étant entendu que plus la mesure de similarité de la suite de caractères de vérification est élevée, plus cette suite de caractères de vérification est sélectionnable comme suite de caractères de correction.
